# EUROPÄISCHE PATENTSCHRIFT

(11) **EP 2 388 184 B1**
(45) Veröffentlichungstag und Bekanntmachung des Hinweises auf die Patenterteilung: **04.11.2015**
(21) Anmeldenummer: 11167087.3
(22) Anmeldetag: 23.05.2011
(51) Int. Cl.: B62D 21/20, B60K 15/067, B62D 21/09

(54) **Fahrgestell für Anhänger oder andere Fahrzeuge**
Chassis for trailers or other vehicles
Châssis pour remorque ou d'autres véhicules

(30) Priorität: 21.05.2010 DE 202010005479 U
(43) Veröffentlichungstag der Anmeldung: 23.11.2011
(73) Patentinhaber: Alois Kober GmbH, 89359 Kötz (DE)
(72) Erfinder: Wilhelm, Klaus, Dr., 89423 Gundelfingen (DE); Müller, Thomas, 89346 Bibertal (DE)
(74) Vertreter: Ernicke, Klaus Stefan

(56) Entgegenhaltungen:
- EP-A2- 1 659 051
- WO-A1-98/34808
- DE-U1- 29 819 191

## Beschreibung

Die Erfindung betrifft ein Fahrgestell und ein damit ausgerüstetes Fahrzeug.

Aus der Praxis ist es bekannt, Fahrgestelle von Anhängern oder Wohnmobilen universell auszubilden und für unterschiedliche Aufbauten einzusetzen. Aufbauspezifische Aggregate, z.B. Heizungen, Klimaanlagen oder dgl. Geräte sind getrennt vom Fahrgestell im oder am Aufbau angeordnet. Dies ist insbesondere bei Wohnwagenaufbauten der Fall. Gleiches gilt auch für Kühlaufbauten. Die Aufbauten und die Fahrgestelle werden i.d.R. von unterschiedlichen Herstellern gefertigt.

Aus der EP 1 659 051 A2 ist eine Tragstruktur eines Nutzfahrzeugs zur Aufnahme eines modularen Abgasreinigungssystems des Nutzfahrzeugs bekannt. Die Tragstruktur weist einen Auflagerahmen, L-förmige Trägerelemente und Holme auf, welche an Längsträgern des Nutzfahrzeugs angeschraubt sind.

Die WO 98/34808 offenbart einen Treibstofftank von Schwerlastfahrzeugen, der mittels gerundeten Stützbügeln und Spannbeschlägen am Fahrzeugrahmen befestigt ist.

Die DE 298 19 191 U1 befasst sich mit einem Anhängerfahrgestell.

Es ist Aufgabe der vorliegenden Erfindung, ein besseres Fahrgestell für Anhänger oder andere Fahrzeuge sowie ein Fahrzeug aufzuzeigen.

Die Erfindung löst diese Aufgabe mit dem Merkmalen in den Ansprüchen 1 und 12.

Die beanspruchte Halterung am Fahrgestell ermöglicht es, ein Aggregat außerhalb, insbesondere unterhalb des Aufbaus unterzubringen, insbesondere mit einem Unterflureinbau. Die Halterung hat den Vorteil, dass das Aggregat eine sichere und geschützte Position einnehmen kann. Der bei Aufbauten, insbesondere bei Wohnwagenaufbauten, regelmäßig knappe Platz kann dadurch anderweitig genutzt werden. Ein externer Aggregateeinbau erleichtert außerdem die Zugänglichkeit des Aggregats für Wartungs-, Inspektions- und Reparaturzwecke. Auch eine nachträgliche Demontage und ein Austausch eines Aggregats werden erleichtert. Weitere Vorteile ergeben sich hinsichtlich Kühlung und Energiezufuhr des Aggregats.

Das Aggregat ist bevorzugt ein Gerät mit einem Antrieb bzw. einer Energiezufuhr. Hierbei kann es sich insbesondere um eine Wasserpumpe mit Wassertank, eine Heizung oder um eine Klima- oder Kühlanlage, aber auch um ein Lüftungsgerät oder dgl. handeln. Besondere Vorteile bestehen bei kastenförmigen bzw. geschlossenen Aufbauten, insbesondere Wohnwagenaufbauten, Kühlkoffern, Verkaufs- oder Präsentationsaufbauten oder dgl., bei denen das Aggregat den Aufbauinnenraum oder dortige Einrichtungen, z.B. eine Kühltheke, versorgt und damit in Verbindung steht, etwa im Rahmen einer Wärme-, Kälte- oder Luftzufuhr.

Die beanspruchte Halterung ermöglicht einen Anbau oder Einbau des Aggregats an geschützter Stelle des Fahrgestells, insbesondere unter dem Boden eines Aufbaus, wobei das Aggregat auch zusätzlich mit diesem Boden verbunden sein kann. Die beanspruchte Halterung ist vielseitig verwendbar und kann auch bei Bedarf verstellt werden. Dies erlaubt Umrüstungen oder Nachrüstungen. Am Fahrgestell können mehrfache Anbaumöglichkeiten für die Halterung vorhanden sein, die nach Wahl benutzt oder auch wieder geändert werden können.

Besonders günstig ist der Anbau der Halterung an Längs- und/oder Querträgern des Fahrgestells, insbesondere an deren aufrechten Stegen. Hier kann eine besonders gut zugängliche und mechanisch stabile Verbindung geschaffen werden, die sich bei Bedarf auch wieder lösen lässt. Günstig ist hierdurch auch die Zugänglichkeit der Halterung und des Aggregats. Zudem wird die Bodenfreiheit des Fahrzeugs nicht negativ beeinträchtigt.

Definierte Schnittstellen zwischen der Halterung und dem Fahrgestell, insbesondere dessen Längs- und/oder Querträgern einerseits sowie ggf. zwischen der Halterung und dem Aggregat andererseits bieten eine Einflussmöglichkeit des Fahrgestellherstellers auf die spätere Nutzung des Fahrgestells. Dies ist besonders unter Haftungsgesichtspunkten für Fahrzeughersteller von Vorteil, weil dadurch unautorisierte Anbauten verhindert werden können. Hierbei kann insbesondere sichergestellt werden, dass nur zugelassene Aggregate an dafür möglichen und vorgesehenen Stellen des Fahrgestells und mit einer speziell hierfür geeigneten und zugelassenen Halterung angebaut werden. Nicht autorisierte Fremdanbauten, die Zulassungsprobleme für das Fahrzeug mit sich bringen können, lassen sich verhindern oder einschränken.

Eine Mehrfachanordnung von Verbindungselementen zwischen Fahrgestell und Halterung hat den Vorteil einer Variabilität in der Gestaltung und Montage der Halterung. Außerdem können unterschiedliche Aggregate angebaut werden. Die Halterung eignet sich auch für die Aufnahme anderer Teile des Fahrgestells und/oder des Aufbaus. Insbesondere kann eine Energieversorgung, speziell eine Batterie oder ein Akkumulator, ein Kompressor oder dgl. mittels der Halterung an einem Fahrgestell angebaut werden.

Die Verbindungselemente zwischen Halterung und Fahrgestell sowie ggf. zwischen Halterung und Aggregat können unterschiedlich gestaltet sein. Sie können für eine lösbare oder eine feste Verbindung sorgen. Sie können insbesondere eine formschlüssige Verbindung bewirken, die für einen sicheren Halt sorgt und die ggf. auch ohne Zuhilfenahme von Werkzeug geöffnet und geschlossen werden kann.

Ein Anbau der Halterung und des Aggregats am Fahrgestell hat ferner den Vorteil, dass dieser Anbau zu einem beliebigen Zeitpunkt erfolgen kann und dass der Aufbau, insbesondere dessen Boden, für den Aggregatanbau nicht standardmäßig vorbereitet und ausgerüstet sein muss. Insbesondere bedarf es keiner Versteifung des Bodens durch zusätzliche Latten oder dgl.. Der Aufbau wird dadurch vereinfacht und gewichtsmäßig entlastet. Dies spart Bauaufwand und Kosten. Die Halterung kann ihrerseits bedarfsweise und erst beim Aggregatanbau montiert werden. Sie belastet das Fahrgestell hinsichtlich Gewicht und Kosten nicht unnötig, falls auf ein Aggregat verzichtet wird. Lediglich das Fahrgestell kann standardmäßig durch eine Schnittstellenbildung vorbereitet sein. Hierfür genügt eine gewichtsneutrale Bearbeitung und Formgebung des Fahrgestells, insbesondere seiner Träger, wobei auch die Stabilisierungsmaßnahmen zur Lastabstützung durch Trägerverformungen ohne gewichtssteigernde Verstärkungen möglich sind. Andererseits bietet eine fahrgestellseitige Mehrfachanordnung von Verbindungselementen, insbesondere in Form eines Rasters oder Registers, eine hohe Flexibilität in der Art, Größe, Zahl und Positionierung der Halterung(en).

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
Figur 1: eine schematische Seitenansicht eines Gespanns mit einem Anhängerfahrgestell, einer Halterung und einem Aggregat eines Aufbaus,
Figur 2: eine Draufsicht auf ein Anhängerfahrgestell ohne Aufbau mit mehreren Halterungen sowie Aggregaten,
Figur 3: eine schematische Seitenansicht eines Längsträgers mit einer Schnittstelle für den Anbau einer Halterung,
Figur 4: einen Schnitt durch einen Längsträger mit einem Halterungsbeschlag gemäß Schnittlinie IV-IV von Figur 3,
Figur 5: eine abgebrochene perspektivische Ansicht einer anderen Anbausituation eines Halters an einem Querträger des Fahrgestells,
Figur 6 und 7: eine abgebrochene Vorder- und Rückansicht eines Fahrgestellteils mit einer Schnittstelle für den Halterungsanbau,
Figur 8 und 9: eine Variante zu der Anordnung von Figur 6 und 7,
Figur 10 bis 14: verschiedene Varianten von Beschlägen jeweils in Seitenansicht und geklappter Stirnansicht und
Figur 15: eine Variante zu Figur 4 mit einer gespannten Halterung.

Die Erfindung betrifft ein Fahrgestell (6) eines Fahrzeugs, insbesondere eines Landfahrzeugs, z.B. eines Anhängers (1) oder eines Kraftfahrzeugs, insbesondere eines Wohnmobils. Die Erfindung betrifft ferner das Fahrzeug, insbesondere den Anhänger (1). Erfindungsgegenstand ist ferner eine Halterung (18).

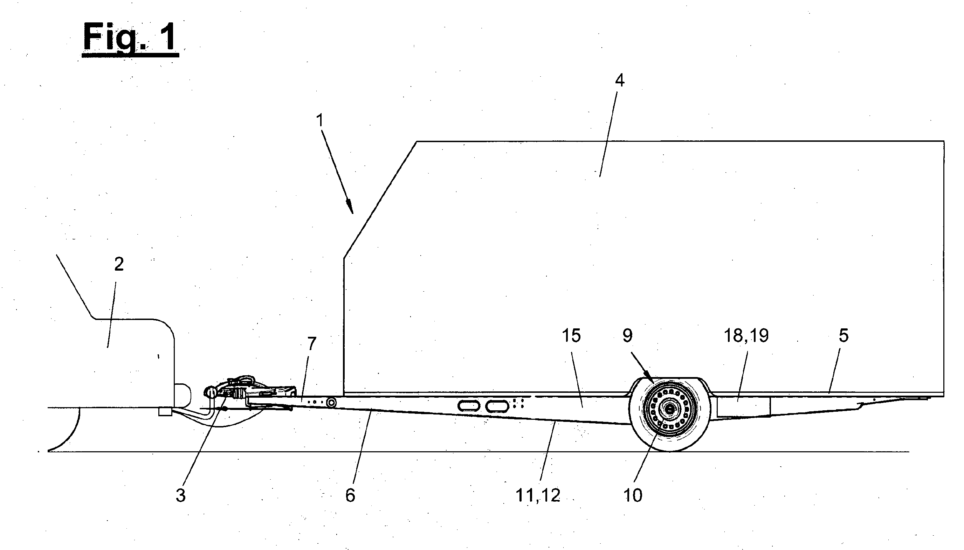

In Figur 1 ist in beispielhafter Form ein gekuppeltes Gespann dargestellt, welches aus einem motorisierten Zugfahrzeug (2) und einem geschleppten Anhänger (1) besteht. Die nachfolgende Beschreibung gilt entsprechend auch für eine andere Art von Fahrzeug (1).

Der Anhänger (1) hat ein Fahrgestell (6), welches auch als Chassis bezeichnet wird. Das Fahrgestell (6) trägt einen Aufbau (4), der z.B. kastenförmig oder kofferförmig gestaltet ist und aus festen und/oder flexiblen Wänden bestehen kann. In der gezeigten Ausführungsform ist der Aufbau (4) als Wohnwagenaufbau gestaltet, der einen Innenraum mit Schlaf- und Wohnmöglichkeiten, einem Sanitärbereich etc. umschließt und der eine oder mehrere Öffnungen in Form von Fenstern, Türen oder dgl. hat. Der Aufbau (4) kann alternativ ein Kühlkoffer, ein Verkaufs-oder Präsentationsaufbau oder ein anderer vorzugsweise hohler Aufbau sein.

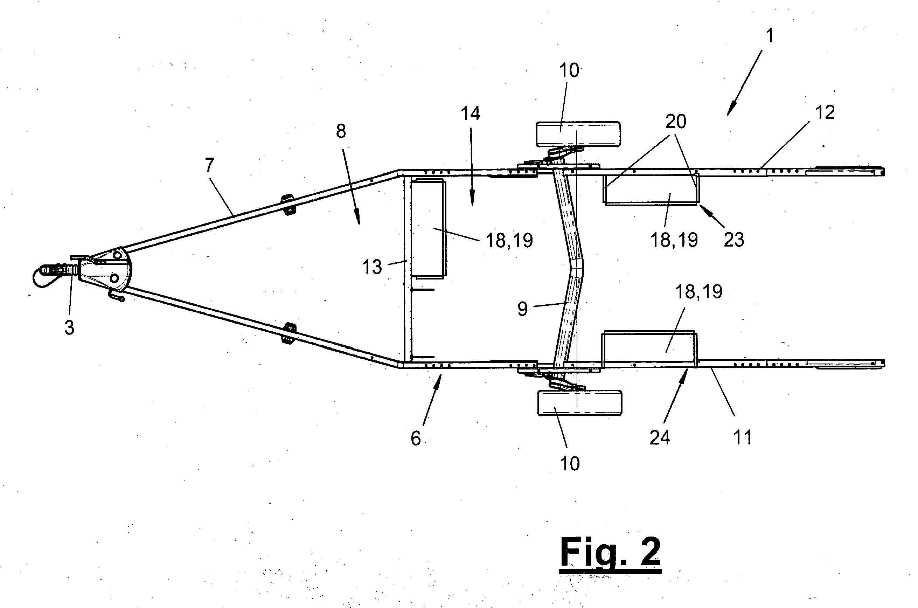

Zum Fahrzeug- oder Anhängeraufbau (4) oder dessen Einrichtung gehört ein Aggregat (19), welches am Fahrgestell (6) mittels einer Halterung (18) angeordnet und montiert ist. Das Aggregat (19) und die Halterung (18) können auch mehrfach sowie ggf. in unterschiedlicher Ausbildung vorhanden sein, wie dies z.B. Figur 2 mit mehreren Anbaumöglichkeiten verdeutlicht. Das Aggregat (19) ist in der gezeigten Ausführungsform ein Klimatisierungsgerät oder ein Teil hiervon, insbesondere eine Heizung, eine Klimaanlage, eine Kühl- oder Gefriereinrichtung, eine Lüftung oder dgl. für den Aufbauinnenraum. Ein Teil-Aggregat kann z.B. ein Wärmeerzeuger und eine Fördereinrichtung und ggf. auch ein Energiespeicher für eine Heizung sein, wobei zugehörige Heizkörper im Aufbauinnenraum angeordnet sind. Das Aggregat (19) kann auch ein anderes Gerät des Aufbaus (4) sein, welches eine Energiezufuhr und/oder einen Antrieb aufweist und eine Versorgung für den Aufbau (4) bietet. Ein Aggregat (19) kann z.B. auch eine Frischwassertank mit einer angebauten Pumpe sein.

Das Aggregat (19) kann einteilig oder mehrteilig sein, wobei z.B. zwei Teile oder Komponenten des Aggregats (19) an gegenüberliegenden Seiten des Fahrgestells (6) oder in anderer Formation angeordnet sind und ggf. zusammenwirken.

Der Aufbau (4) besitzt einen Boden (5), der z.B. plattenförmig ausgebildet ist, alternativ aber auch eine gewölbte, abgestufte oder anderweitig geformte räumliche Kontur haben kann. Der Boden (5) kann auch mehrlagig sein und Zwischenräume aufweisen. Er ist in geeigneter Weise auf dem Fahrgestell (6) befestigt, z.B. angeschraubt. Das Aggregat (19) ist außerhalb des Aufbaus (4) angeordnet und befindet sich z.B. unterhalb des Aufbaus (4) und des Bodens (5). Es kann im Unterflureinbau in einem Innenraum (14) des Fahrgestells (6) angeordnet sein. Es befindet bevorzugt unterhalb und innerhalb der randseitigen Umgrenzung des Bodens (5) und kann auch mit diesem zusätzlich verbunden sein, z.B. durch Befestigungsflansche mit Schrauben oder anderen Verbindungselementen. Außerdem kann eine Verbindung des Aggregats (19) mit dem Innenraum des Aufbaus (4) bestehen, z.B. durch Fluidleitungen für die Ansaug- und Ausblasluft eines als Lüftungseinrichtung für Luftumwälzung oder dgl. ausgebildeten Aggregats (19). Bei einer ausgelagerten Heizung können Leitungen für Heizflüssigkeiten, Warmluft oder dgl. zur Verbindung des Aggregats (19) mit dem Aufbauinnenraum vorhanden sein.

Entsprechendes gilt für eine Kühl- oder Gefriereinrichtung, wobei z.B. auch eine Verbindung zu einer Kühltheke, einem Kühlschrank, einem Wärmetauscher oder dgl. im Aufbau (4) vorhanden sein kann.

Das Fahrgestell (6) weist einen oder mehrere in Fahrzeuglängsrichtung sich erstreckende Längsträger (11,12) auf. Z.B. sind zwei parallele Längsträger (11,12) vorhanden. Diese können einteilig oder mehrteilig sein. Das Fahrgestell (6) kann ferner einen oder mehrere Querträger (13) besitzen.

Ferner hat das Anhängerfahrgestell (6) eine Deichsel (7). Dies ist vorzugsweise eine starre Deichsel, die z.B. wie in der gezeigten Ausführungsform als V-Deichsel ausgebildet ist und an die Längsträger (11,12) anschließt. Alternativ kann die Deichsel (7) als Rohrdeichsel oder dgl. ausgebildet sein. Die Deichsel (7) umschließt einen Deichselbereich (8). Dies kann z.B. der offene Bereich zwischen den Deichselholmen vor dem Aufbau (4) sein. Die Deichsel (7) trägt am vorderen Ende eine Anhängerkupplung (3). Hier kann ggf. auch eine Handbremseinrichtung, ein Stützrad oder dgl. angeordnet sein. Die Anhängerkupplung (3) kann mit einer Betriebsbremse, z.B. einer Auflaufbremse, einer elektrischen Trägheitsbremse oder dgl. sowie auch einer Feststellbremse ausgerüstet sein.

Das Fahrgestell (6) weist ferner eine Achsanordnung (9) auf. Diese kann eine Einzelachse oder eine Mehrfachachse, insbesondere eine Tandemachse mit einer entsprechenden Zahl von Rädern (10) aufweisen. Sie kann auch Teile einer Bremseinrichtung, insbesondere Radbremsen, aufweisen. Die Achsanordnung (9) kann im weiteren einen oder mehrere Achsböcke aufweisen, die mit dem oder den Längsträger(n) (11,12) verbunden sind. Bei geteilten Längsträgern (11,12) können die vorderen und hinteren Trägerteile beidseits mit einem Achsbock verbunden sein, z.B. durch Schrauben oder dgl.

Am Fahrgestell (6) ist eine Halterung (18) angeordnet, die auch mehrfach vorhanden sein kann und die sich vorzugsweise im Innenraum (14) des Fahrgestells (6) befindet. Der Innenraum (14) ist zwischen den distanzierten Längsträgern (11,12) angeordnet und kann durch einen oder mehrere Querträger (13) ggf. in axialer Richtung begrenzt sein.

Die Halterung (18) ist an einem Längsträger (11,12) und/oder an einem Querträger (13) des Fahrgestells (6) angeordnet. Figur 2 zeigt beispielhaft drei Anbaumöglichkeiten. Die Zahl der Halterungen (18) kann kleiner oder größer sein. Desgleichen kann auch der Anbauort am Fahrgestell (6) variieren.

Die Halterung (18) kann wie in den gezeigten Ausführungsbeispielen einseitig mit einem einzelnen Längsträger (11,12) und/oder einem Querträger (13) fest oder lösbar verbunden sein. Alternativ ist eine mehrseitige Verbindung der Halterung (18) mit einem Längsträger (11,12) und/oder einem Querträger (13) möglich. Dies kann z.B. eine Eckverbindung mit einem Längsträger (11,12) und einem Querträger (13) sein. Es kann sich z.B. auch um eine Verbindung mit einander gegenüber liegenden Längsträgern (11,12) oder einem Querträgern (13) handeln.

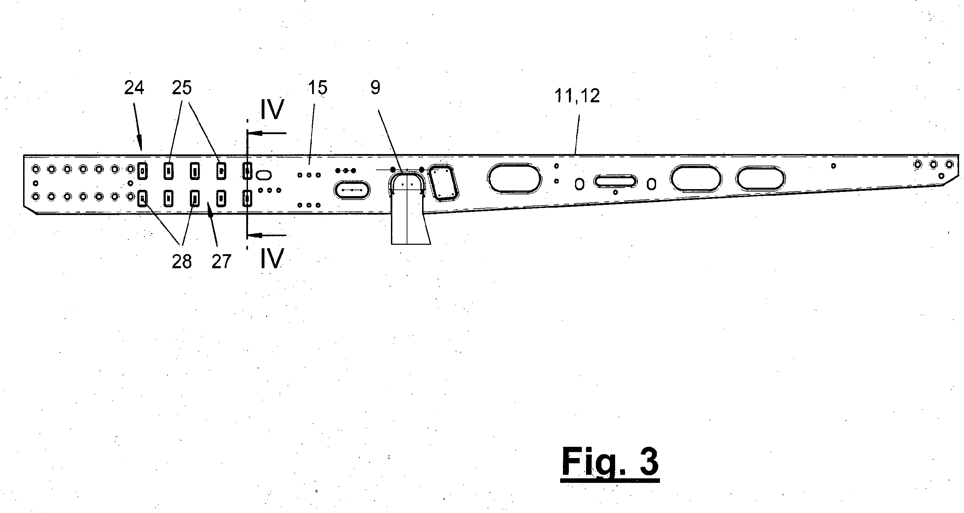

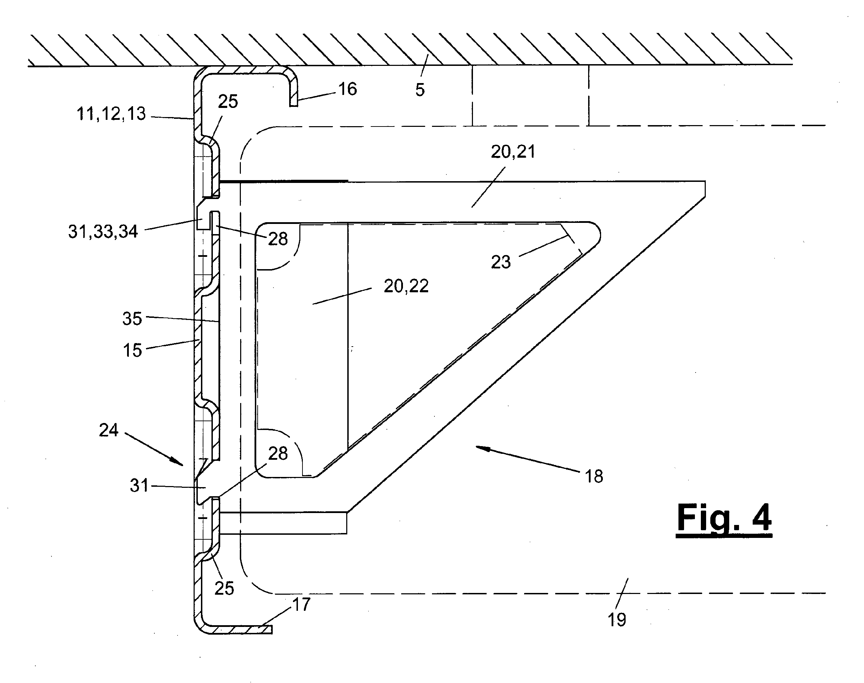

Figur 3 zeigt in einer schematischen Seitenansicht einen Längsträger (11,12) mit einer Anbaustelle für eine Halterung (18). Figur 4 zeigt hierzu einen Querschnitt durch den Längsträger (11,12) mit einem Beschlag (20) der Halterung (18). Der Boden (5) liegt auf dem Längsträger (11,12) auf. Die Halterung (18) bzw. der Beschlag (20) endet mit Abstand unterhalb des Bodens (5) und ist mit diesem hier z.B. nicht verbunden. Das Aggregat (19) und auch dessen evtl. Befestigung am Boden sind zusätzlich und schematisch dargestellt.

Die Längs- und Querträgerträger (11,12,13) können ähnlich ausgebildet sein und bestehen jeweils aus abgekanteten, vorzugsweise mehrfach abgekanteten, dünnwandigen Blechprofilen. Das Trägerprofil weist jeweils einen aufrechten Steg oder sog. Mittelsteg (15) auf, an dem die Halterung (18) vorzugsweise befestigt wird. An der Stegoberseite kann sich ein abgekanteter Quersteg oder Obergurt (16) anschließen. Am unteren Stegrand kann sich ein ebenfalls abgekanteter Quersteg oder Untergurt (17) anschließen. Die Querstege (16,17) können nach der gleichen oder nach unterschiedlichen Seiten gerichtet sein. In der gezeigten Ausführungsform hat das Trägerprofil im Querschnitt im wesentlichen eine C-Form. Alternativ kann eine Z-, S- oder L-Form vorgesehen sein. Der Obergurt (16) kann eine Auflagefläche für den Boden (5) und für dessen Befestigung bilden.

Die Halterung (18) weist einen oder mehrere Beschläge (20) auf, die z.B. als Rahmen (21) mit einer oder mehreren Rahmenöffnung(en) oder als Platte (22) oder in anderer Weise gestaltet sein können. Der Rahmen (21) kann z.B. eine Dreiecks- oder Trapezform aufweisen und besitzt eine vertikale bzw. aufrechte Wand (35), die dem Fahrgestell (6) bzw. einem Träger (11,12,13) zugewandt ist. Die Halterung (18) kann z.B. von zwei parallelen Beschlägen (20) gebildet sein, zwischen denen das Aggregat (19) oder ein anderes Fahrzeugteil aufgenommen wird. Die Beschläge (20) können insoweit als Tragbügel fungieren. Ferner können die vom Träger (11,12,13) wegragenden Beschläge (20) am freien Ende mit einer Querverbindung, z.B. einer Strebe, einem Rahmen, einer Platte oder dgl. miteinander zu einem in der Draufsicht U-förmigen oder kastenförmigen Teil verbunden sein. Desgleichen kann auch im trägernahen Bereich eine weitere Querverbindung vorhanden sein. Die Beschläge (20) sind z.B. als dünnwandige Blechteile ausgebildet. In einer nicht dargestellten Variante können ein oder mehrere Aggregate (19) in einem offenen oder geschlossenen Behälter oder Gehäuse angeordnet sein. Der Behälter kann Bestandteil der Halterung (18) oder des Aggregats (19) sein und kann mittels einem oder mehreren Beschlägen, z.B. der vorgenannten Art (20), mit einem Längs- und/oder Querträger (11,12,13) verbunden werden.

Das Fahrgestell (6) und die Halterung (18) besitzen vorzugsweise eine definierte Schnittstelle (24) für die Montage und die gegenseitige Adaption. Ferner kann auch die Halterung (18) und das Aggregat (19) eine definierte Schnittstelle (23) für den Anbau und die gegenseitige Adaption aufweisen. Die Schnittstellen (23,24) sind derart ausgebildet, dass nur vorgesehene und passende Halterungen (18) am Fahrgestell (6), insbesondere an dessen Träger(n) (11,12,13) befestigt werden können und die Halterung (18) auch nur ein vorgesehenes und zugehöriges Aggregat (19) aufnimmt. Für die Ausbildung der Schnittstellen (23,24) gibt es unterschiedliche Möglichkeiten, von denen in den Zeichnungen mehrere Varianten dargestellt sind.

Die Schnittstellen (23,24) können z.B. durch gegenseitig angepasste und zusammenwirkende, insbesondere ineinander greifende Verbindungselemente (28,31,32) an der Halterung (18), am Fahrgestell (6), insbesondere an dessen Träger(n) (11,12,13) und ggf. auch am Aggregat (19) gebildet werden. Die Adaption kann durch gegenseitige Anpassung der Anordnung, Form und/oder Größe der Verbindungselemente (28,31,32) erfolgen. Die Halterung (18) wird am Fahrgestell (6) bevorzugt ohne Wärmeeinbringung, insbesondere ohne thermische Schweißverbindung, befestigt, wobei sie insbesondere mit sicherbarem Formschluss gehalten, bevorzugt eingehängt ist.

Die Aggregatschnittstelle (23) ist in Figur 4 lediglich schematisch angedeutet und weist z.B. mindestens ein seitlich vorstehendes Verbindungselement am Aggregat (19) auf, welches mit einem mehrseitigen und die Position sichernden formschlüssigen Eingriff mit einer Öffnung am Beschlag (29,21) steht.

Die Halterung (18) wird am Fahrgestell (6), vorzugsweise an dessen Trägern (11,12,13) in geeigneter Weise, vorzugsweise formschlüssig, gehalten. Sie kann insbesondere eingehängt werden. Sie kann auch wieder demontiert werden. Die Verbindung bzw. Montage kann dementsprechend fest oder lösbar sein. Die Halterung (18) kann bei der Herstellung des Fahrgestells (6) eingebaut werden. Sie kann auch nachträglich montiert werden, insbesondere erst für den tatsächlichen Anbau eines Aggregats (19).

Die Halterungsschnittstelle (24) weist gegenseitig adaptierte Verbindungselemente (28,31,32) am Fahrgestell (6) und an der Halterung (18) auf. Die Verbindungselemente (31,32) befinden sich dabei vorzugsweise an dem oder den Beschlägen (20). Die Verbindungselemente (28,31,32) können für eine sichere Halte- und Tragfunktion mehrfach vorhanden sein. Am Fahrgestell (6) sind z.B. die Verbindungselemente (28) in mehreren, insbesondere zwei Reihen, übereinander angeordnet. Sie können auch eine beliebig andere Mehrfachanordnung (27) aufweisen. Bevorzugt ist eine Mehrfachanordnung (27) in Gestalt eines regelmäßigen Rasters, der verschiedene Anbau- und Einstellmöglichkeiten bietet.

Die Verbindungselemente (28, 31, 32,) können in geeigneter Weise zusammenwirken. Sie können insbesondere formschlüssig ineinander greifen. Die Verbindungselemente (28) am Fahrgestell (6) sind z.B. als Öffnungen ausgebildet und befinden sich vorzugsweise am aufrechten Steg (15). Die Verbindungselemente (31,32) der Halterung (18) können z.B. als Haken oder Flansche ausgeführt sein und befinden sich z.B. im Bereich der Wand (35) an dem oder den Beschlägen (20). Die Zuordnung kann alternativ auch umgekehrt sein.

Für die Verbindungselemente (28,31,32) können am Fahrgestell (6) eine oder mehrere Versteifungen (25,26) angeordnet sein. Diese können z.B. als Vorsprünge an einem Längs- und/oder Querträger (11,12,13), insbesondere an dessen Mittelsteg (15), ausgebildet sein. Derartige Verformungen können z.B. sickenartige Prägungen der Stegwand sein. Die Versteifungen oder Vorsprünge (25,26) können nach der gleichen Trägerseite oder nach unterschiedlichen Trägerseiten gerichtet sein. Sie können eine im wesentlichen ebene und parallel zur Steghauptebene ausgerichtete Anlagefläche für die Halterung (18) bzw. den Beschlag (20) bieten, an der auch das Verbindungselement (28), z.B. die Öffnung, angeordnet ist.

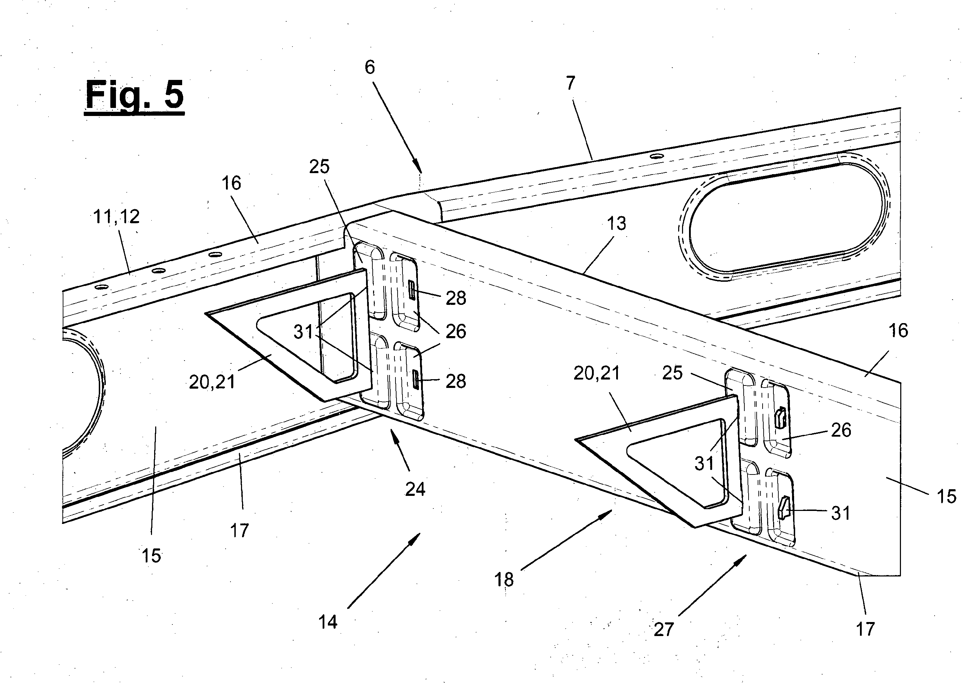

Figur 5 zeigt z.B. eine an einem Querträger (13) angeordnete Halterung (18) mit zwei rahmenartigen Beschlägen (20,21), die in aufrechter Lage angeordnet sind und jeweils ein oberes und ein unteres, vorzugsweise hakenförmiges, Verbindungselement (31) tragen. Am Mittelsteg (15) sind vorspringende Versteifungen oder Stegverformungen (25,26) angeordnet, die nach unterschiedlichen Trägerseiten weisen. Die Versteifungen (25) sind zum Fahrzeugheck gerichtet und ausgewölbt. Die Versteifungen (26) weisen in die Gegenrichtung zur Deichsel (7) und zum vorderen Deichselende. Mit einer solchen Anordnung von Versteifungen (25,26) können Halterungen (18) beidseits an einem Längs- und/oder Querträger (11,12,13) montiert werden.

Die Versteifungen (25,26) und die dortigen Verbindungselemente (28) sind in zwei Reihen mit Abstand übereinander angeordnet. Bei der gezeigten Ausführungsform sind vier Versteifungen (25,26) und vier Verbindungselemente (28) vorhanden. In der Ausführungsform von Figur 3 sind an einem Längs- oder Querträger (11,12,13) zehn Verbindungselemente (28) und Versteifungen (25) in einem zweireihigen Raster (27) angeordnet. In diesem Fall weisen die Versteifungen (25) nach der gleichen Trägerseite, vorzugsweise zum Innenraum (14). Figur 4 verdeutlicht diese Anordnung und Ausrichtung. Hierdurch wird auch ersichtlich, dass durch die Vorsprünge (25) nicht nur eine Stabilisierung oder Versteifung des Stegs (15) im Verbindungsbereich erzielt wird, sondern auch der Beschlag (20) mit seiner Wand (35) von der Steghauptebene distanziert wird. Die Verbindungselemente (28,31) liegen z.B. fluchtend in der Vertikalen übereinander. Durch die ebenfalls übereinander liegenden Versteifungen oder Verformungen (25) ergeben sich außerdem voneinander distanzierte Anlagestellen des Beschlags (20) bzw. seiner Wand (35) am Fahrgestell (6) bzw. Träger (11,12,13) und damit eine besser definierte Position und Führung.

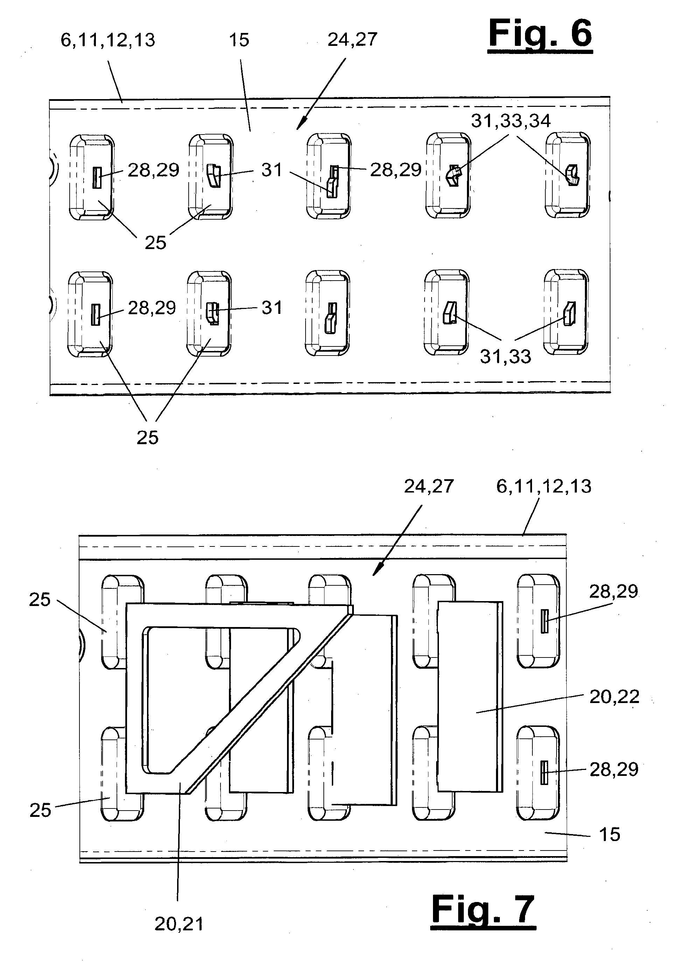

Figur 6 und 7 zeigen ebenfalls eine Mehrfachanordnung bzw. ein Raster (27) von Verbindungselementen (28,31) und Versteifungen bzw. Vorsprüngen (25), die hier wieder zur gleichen Trägerseite gerichtet sind.

Figur 6 und 7 verdeutlichen außerdem eine beispielhafte Formgebung der Verbindungselemente bzw. Öffnungen (28). Diese sind hier als gerade und vertikale Schlitze (29) mit parallelen Schlitzwänden ausgebildet. Alternativ können die Schlitze (29) eine gebogene oder wellenförmige Gestalt und auch nicht parallel Schlitzwände haben. Die Verbindungselemente (31) an den Beschlägen (20) sind hieran in der Größe und der Form angepasst. Sie sind als Haken mit einer abgewinkelten Nase (33) ausgebildet. Diese kann ggf. am freien Ende eine seitliche Abwinklung (34) haben, die ggf. nachträglich mit einem Werkzeug eingebracht wird und die für einen formschlüssigen Hintergriff der den Schlitz (29) umgebenden Trägerwandung sorgt.

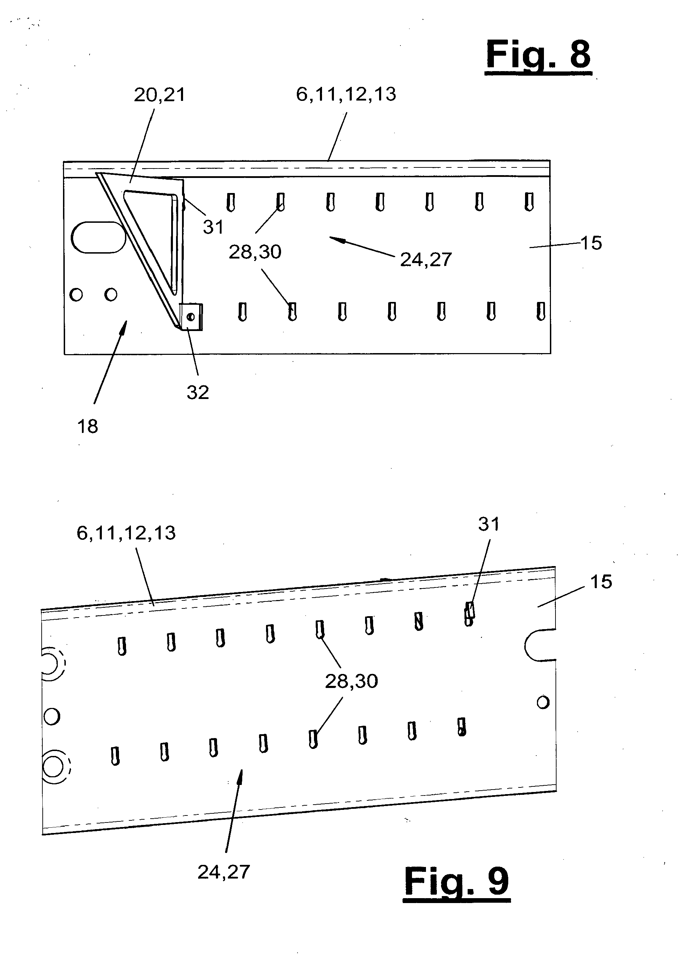

In Figur 8 und 9 ist eine Variante dargestellt, in der auf Versteifungen bzw. Vorsprünge oder Prägungen (25,26) am Träger (11,12,13) und insbesondere an dessen aufrechtem Steg (15) verzichtet wird. Der Steg (15) hat hierdurch eine ebene Form in Verbindungsbereich.

Die Verbindungselemente oder Öffnungen (28) sind in diesem Ausführungsbeispiel als Schlüssellöcher (30) ausgebildet und bestehen aus einem vertikalen Schlitzteil mit einer etwas breiteren runden Öffnung am unteren Schlitzende. Die runde Öffnung kann auch am oberen Schlitzende angeordnet sein.

Der Beschlag (20) hat in diesem Ausführungsbeispiel ein hakenförmiges Verbindungselement (31) und ein als Flansch ausgebildetes Verbindungselement (32), welches z.B. am unteren Beschlagende angeordnet ist. Der Flansch (32) erstreckt sich quer zur Beschlaghauptebene und kann eine Durchgangsbohrung aufweisen, die ggf. mit einem Schlüsselloch (30) und insbesondere dessen runder Öffnung korrespondiert. Hier kann ein Stift, eine Schraube oder dgl. eingesetzt werden und für eine feste Verbindung sorgen. Bei einer solchen Ausbildung können die Schlüssellöcher (30) in der oberen und unteren Reihe zueinander versetzt angeordnet sein, wobei der Versatz der seitlichen Ausladung des Flansches (32) entspricht.

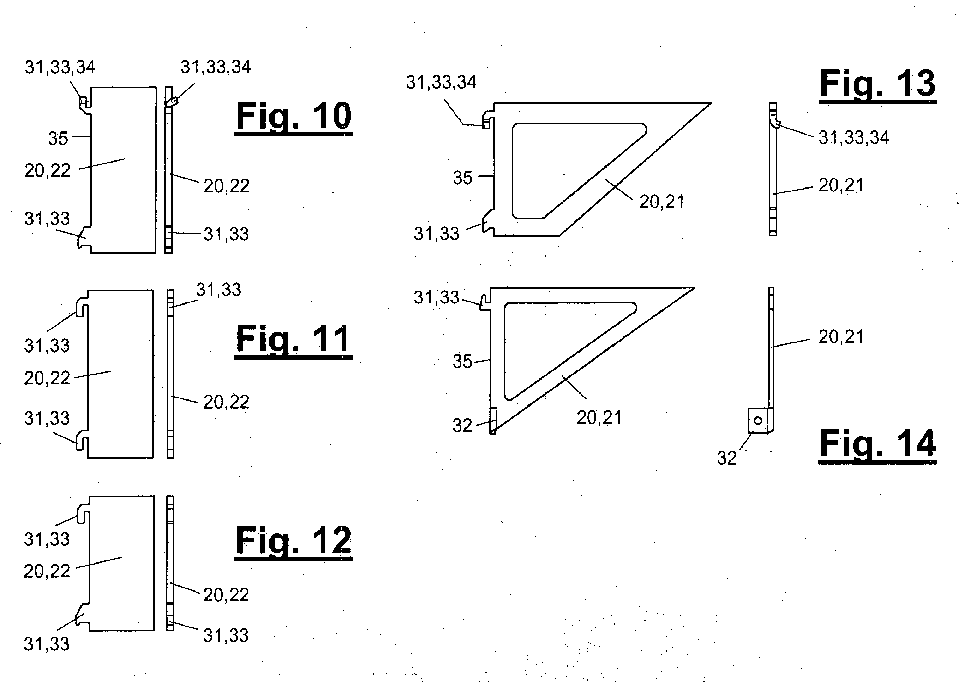

Figur 10 bis 14 zeigen verschiedene Varianten in der Ausbildung der Verbindungselemente (31,32) an der Halterung (18) bzw. am Beschlag (20). In Figur 10 ist das untere Verbindungselement (31) als abgewinkelte und verdickte Nase (33) gestaltet. Das obere Verbindungselement (31) weist ebenfalls eine Nase (33) auf, die hier L-förmig gebogen und zusätzlich seitlich abgewinkelt (34) ist.

Bei Figur 11 sind die beiden Verbindungselemente (31) gleich ausgebildet und haben z.B. die von L-förmigen und nach unten gerichteten Nasen (33), die sich an Schlitzen (29) einhängen und nach unten am Schlitzrand einrasten lassen.

Bei Figur 12 sind eine L-förmige Nase (33) mit einer schrägen und verdickten Nase (33) kombiniert. Figur 10 bis 12 zeigen außerdem unterschiedlich dimensionierte Platten (22). Die zur Verbindung mit dem Aggregat (19) oder einem anderen Teil vorgesehenen Verbindungselemente sind hier der Übersicht halber nicht dargestellt. Es kann sich z.B. um Stifte, Öffnungen oder dgl. in einer vorgegeben mehrfachen Anordnung handeln.

In Figur 13 ist ein Beschlag (20) in Form eines trapezförmigen Rahmens (21) mit einem oberen vorspringenden spitzen freien Ende und einer Rahmenöffnung dargestellt, die ein Verbindungselement zur formschlüssigen Aufnahme eines entsprechenden Vorsprungs an einem Aggregat (19) oder dgl. darstellen kann. Dieser Beschlag (20) hat unterschiedlich geformte hakenförmige Verbindungselemente (31) mit Nasen (33) entsprechend Figur 10. Die obere Nase (33) kann eine seitliche Abwinklung (34) für den formschlüssigen Hintergriff an einem Schlitz (29) aufweisen.

Figur 14 zeigt einen Beschlag (20) entsprechend Figur 8 mit einem flanschartigen Verbindungselement (32) am unteren Ende und einem oberen hakenförmigen Verbindungselement (31) mit einer L-förmigen und nach oben gerichteten Nase (33).

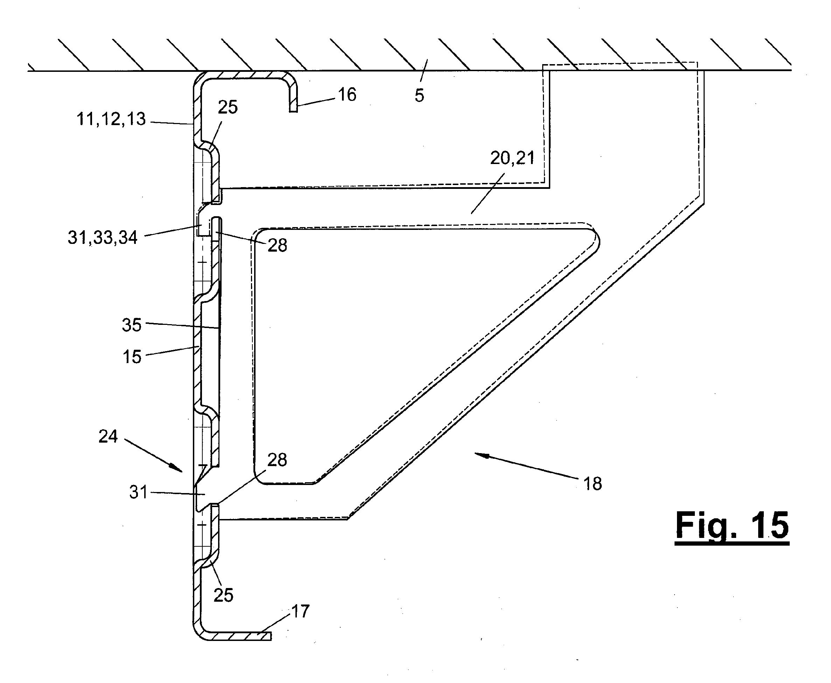

Figur 15 zeigt eine Variante der Halterungsmontage gegenüber Figur 4. Die Halterung (18) kann hier in einer Spannlage montiert werden. Sie kann auch eine feste oder lose Verbindung mit dem Boden (5) des Aufbaus (4) haben. Die Halterung (18) bzw. deren Beschlag (20) reicht hierbei bis in den Erstreckungsbereich des später montierten Bodens (5) und kann z.B. ein kleines Stück über den Obergurt (16) eines Trägers (11,12,13) nach oben ragen. Die Verbindungselemente (28,31,32) sind hierbei im Eingriff. Wenn dann der Boden (5) montiert wird, drückt er die Halterung (18) bzw. den Beschlag (20) nieder, wodurch dieser sich über die Verbindungselemente (28,31,32) mit dem Fahrgestell (6) bzw. dem Träger (11,12,13) verspannt. Dies sichert die Halterungsmontage und den Eingriff an der Anbaustelle bzw. Halterungsschnittstelle (24). Die Spannlage ist mit durchgezogenen Strichen dargestellt. Die anfängliche Stellung wird gestrichelt angedeutet.

Abwandlungen der gezeigten und beschriebenen Ausführungsformen sind in verschiedener Weise möglich. Ein Beschlag (20) kann statt der gezeigten Paare von Verbindungselemente (31,32) eine andere Zahl und/oder Anordnung von Verbindungselemente (31,32) haben. Ferner können auch die Versteifungen (25,26) eine andere Formgebung besitzen und z.B. statt der länglichen aufrechten Form eine kreisrunde oder sonstige Formgebung haben. Auch die Formgebung der Beschläge (20) kann variieren. Sie können statt der Platten- oder Scheibenform eine gewölbte, abgekantete oder in anderer Weise räumlich konturierte Form haben. Ein Rahmen (21) kann mehrere Öffnungen besitzen. Er kann auch seitlich abstehende Teile aufweisen.

In den gezeigten Ausführungsbeispielen ist das Fahrzeug (1) als Anhänger und das Fahrgestell (6) als Anhängerfahrgestell ausgebildet. In einer nicht dargestellten Variante kann das Fahrgestell (6) Bestandteil eines Kraftfahrzeugs sein. Das Fahrgestell (6) kann insbesondere ein Anbauchassis für einen motorisierten Zugkopf mit einem Frontantrieb und einem Fahrerhaus darstellen. Ein solches Anbauchassis ist eine eigenständige Fahrzeugkomponente mit einem Fahrgestell mit Längs- und ggf. Querträgern und einem eigenen Achsaggregat, z.B. einer niedrig bauenden Gummifederachse in Schräglenkerbauweise, die in der Regel von einem anderen Hersteller als das Kraftfahrzeug stammt und die nachträglich an einen kurzen Zugkopf montiert wird. Das Anbauchassis kann tiefer gelegt sein gegenüber dem Fahrgestellteil des Zugkopfes, wobei an der Verbindungsstelle ein Adapter zum Ausgleich des Höhenversatzes angeordnet sein kann, der z.B. als Schraubadapter ausgebildet ist. Der Zugkopf und das Anbauchassis können z.B. eine Grundkonstruktion gemäß der WO 00/37301, EP 1 506 914 A2, EP 1 634 798 A1 oder DE 298 22 564 U1 haben. Der Aufbau kann auch in diesem Fall eines Anbauchassis kastenförmig sein und kann ein Wohnmobilaufbau, ein Kühlkoffer oder dgl. sein. In den verschiedenen Fahrzeugvarianten kann der Aufbau (4) auch eine Kabine oder ein Kasten eines Verkaufsstandes oder eines Präsentationsraumes oder dgl. sein.

Bedeutsam für das Fahrgestell (6) und ggf. das damit ausgerüstete Fahrzeug (1) sind insbesondere auch folgende Erfindungsaspekte, die voneinander unabhängig sind, wobei sie sich aber auch miteinander und mit anderer Merkmalen der Erfindung kombinieren lassen. Die Halterung (18) kann für einen Festeinbau des Aggregats (19) vorgesehen und ausgelegt sein. Die Halterung (18) kann spannbar ausgebildet sein. Sie kann insbesondere in einer Spannposition am Fahrgestell (6) und dessen Träger(n) (11,12,13) montiert werden. Die Halterung (18) kann mit einem Boden (5) des Aufbaus (4) verbunden werden. Ein Beschlag (20) der Halterung (18) kann als Rahmen (21) oder als Platte (22) ausgebildet sein. Eine Sicherung oder Verspannung der Halterung (18) kann z.B. durch eine Ausbildung eines hakenförmigen Verbindungselements (31) in Form einer Nase (33) mit einer seitlichen Abwinklung (34) erfolgen. Das Aggregat (19) ist unter dem Aufbau (4), insbesondere unter dessen Boden (5) angeordnet. Es kann dabei an einem Boden (5) des Aufbaus (4) befestigt sein. Das Aggregat (19) kann eine funktionale Verbindung in den Inneraum des Aufbaus (4) aufweisen. Das Aggregat (19) und die Halterung (18) sind außerhalb eines Deichselbereichs (8) des Anhängers (1) angeordnet. Das Aggregat (19) kann als Heizung oder als Klimaanlage ausgebildet sein. Der Aufbau (4) kann für alle Fahrgestell- und Fahrzeugvarianten als Wohnwagenaufbau, als Kühlkoffer oder als Verkaufs- oder Präsentationsaufbau ausgebildet sein.

### BEZUGSZEICHENLISTE

- 1: Fahrzeug, Landfahrzeug, Anhänger
- 2: Zugfahrzeug
- 3: Anhängerkupplung
- 4: Aufbau, Anhängeraufbau, Kastenaufbau
- 5: Boden
- 6: Fahrgestell, Chassis, Anhängerfahrgestell
- 7: Deichsel
- 8: Deichselbereich
- 9: Achsanordnung
- 10: Rad
- 11: Längsträger
- 12: Längsträger
- 13: Querträger
- 14: Innenraum des Fahrgestells
- 15: Steg, Mittelsteg
- 16: Steg, Quersteg, Obergurt
- 17: Steg, Quersteg, Untergurt
- 18: Halterung
- 19: Aggregat, Heizung, Klimaanlage
- 20: Beschlag
- 21: Rahmen
- 22: Platte
- 23: Schnittstelle, Aggregatschnittstelle
- 24: Schnittstelle, Halterungsschnittstelle
- 25: Versteifung, Vorsprung, Prägung
- 26: Versteifung, Vorsprung, Prägung
- 27: Mehrfachanordnung, Raster
- 28: Verbindungselement, Öffnung, Trägeröffnung
- 29: Schlitz
- 30: Schlüsselloch
- 31: Verbindungselement, Haken
- 32: Verbindungselement, Flansch
- 33: Nase
- 34: Abwinklung
- 35: Wand

## Patentansprüche

1. Fahrgestell für Landfahrzeuge mit zwei Längsträgern (11,12), ggf. einem Querträger (13) und einer Achsanordnung (9), wobei an einem Längsträger (11,12) und/oder einem Querträger (13) eine Halterung (18) für ein Aggregat (19) eines Fahrzeugaufbaus (4) angeordnet ist und wobei der Längsträger (11,12) und/oder Querträger (13) und die Halterung (18) eine definierte Schnittstelle (24) für die Montage und die gegenseitige Adaption aufweisen, **dadurch gekennzeichnet, dass** die Halterungsschnittstelle (24) gegenseitig adaptierte Verbindungselemente (28,31,32) an einem Längsträger (11,12) und/oder einem Querträger (13) und an der Halterung (18) aufweist, wobei ein Verbindungselement (28) als Öffnung, insbesondere als Schlitz (29) oder als Schlüsselloch (30), in einem Längsträger (11,12) und/oder einem Querträger (13) ausgebildet ist und ein Verbindungselement (31,32) an der Halterung (18) als ggf. verspannbarer oder sicherbarer Haken oder als Flansch ausgebildet ist.

2. Fahrgestell nach Anspruch 1, **dadurch gekennzeichnet, dass** die Halterung (18) und das Aggregat (19) des Aufbaus (4) für den Anbau und die gegenseitige Adaption eine definierte Schnittstelle (23) mit gegenseitig adaptierte Verbindungselementen an der Halterung (18) und am Aggregat (19) aufweist.

3. Fahrgestell nach Anspruch 1 oder 2, **dadurch gekennzeichnet, dass** die Halterung (18) in einem Innenraum (14) des Fahrgestells (6) zwischen den Längsträgern (11,12) angeordnet ist.

4. Fahrgestell nach Anspruch 1, 2 oder 3, **dadurch gekennzeichnet, dass** die Halterungsschnittstelle (24) an einem aufrechten Steg (15) eines Längsträgers (11,12) und/oder eines Querträgers (13) angeordnet ist.

5. Fahrgestell nach einem der vorhergehenden Ansprüche, **dadurch gekennzeichnet, dass** an einer Halterungsschnittstelle (24) an einem Längsträger (11,12) und/oder einem Querträger (13) mehrere Verbindungselemente (28,31,32), insbesondere in einem Raster (27), angeordnet sind.

6. Fahrgestell nach einem der vorhergehenden Ansprüche, **dadurch gekennzeichnet, dass** die Halterung (18) am Fahrgestell (6) ohne thermische Schweißverbindung befestigbar ist, wobei sie mit sicherbarem Formschluss gehalten, bevorzugt eingehängt ist.

7. Fahrgestell nach einem der vorhergehenden Ansprüche, **dadurch gekennzeichnet, dass** der Längsträger (11,12) und/oder der Querträger (13) als mehrfach abgekantetes Blechprofil ausgebildet ist, wobei ein Verbindungselement (28,31,32) der Halterungsschnittstelle (24) an einem aufrechten Steg (15) eines Längsträgers (11,12) und/oder eines Querträgers (13) angeordnet ist und eine Versteifung (25,26), insbesondere einen Vorsprung oder eine Verformung aufweist.

8. Fahrgestell nach einem der vorhergehenden Ansprüche, **dadurch gekennzeichnet, dass** die Halterung (18) einen oder mehrere am Fahrgestell (6) montierbare Beschläge (20) mit einem oder mehreren, insbesondere zwei Verbindungselement(en) (28,31,32), aufweist.

9. Fahrgestell nach einem der vorhergehenden Ansprüche, **dadurch gekennzeichnet, dass** die Halterung (18) an einer oder an mehreren Seiten mit einem Längsträger (11,12) und/oder einem Querträger (13) fest oder lösbar verbunden ist.

10. Fahrgestell nach einem der vorhergehenden Ansprüche, **dadurch gekennzeichnet, dass** die Halterung (18) einen Behälter zur Aufnahme von einem oder von mehreren Aggregaten (19) aufweist.

11. Fahrgestell nach einem der vorhergehenden Ansprüche, **dadurch gekennzeichnet, dass** ein Aggregat (19) als Klimatisierungsgerät oder als Teil hiervon, insbesondere als Heizung, Klimaanlage, Kühl- oder Gefriereinrichtung, Lüftung oder dgl. für den Aufbauinnenraum, oder als Wärmeerzeuger und Fördereinrichtung und ggf. auch Energiespeicher für eine Heizung oder als Frischwassertank mit einer angebauten Pumpe ausgebildet ist.

12. Fahrzeug, insbesondere Landfahrzeug, mit einem Fahrgestell (6), einem bevorzugt kastenförmigen Aufbau (4) und einem Aggregat (19) des Aufbaus (4), insbesondere einer Heizung oder Klimaanlage, wobei das Fahrgestell (6) zwei Längsträger (11,12), ggf. einen Querträger (13) und eine Achsanordnung (9) aufweist und wobei an einem Längsträger (11,12) und/oder einem Querträger (13) eine Halterung (18) für das außerhalb und unterhalb des Aufbaus (4) angeordnete und mit dem Aufbau (4) funktional verbundene Aggregat (19) angeordnet ist und wobei der Längsträger (11,12) und/oder Querträger (13) und die Halterung (18) eine definierte Schnittstelle (24) für die Montage und die gegenseitige Adaption aufweisen, wobei die Halterungsschnittstelle (24) gegenseitig adaptierte Verbindungselemente (28,31,32) an einem Längsträger (11,12) und/oder einem Querträger (13) und an der Halterung (18) aufweist, wobei ein Verbindungselement (28) als Öffnung, insbesondere als Schlitz (29) oder als Schlüsselloch (30), in einem Längsträger (11,12) und/oder einem Querträger (13) ausgebildet ist und ein Verbindungselement (31,32) an der Halterung (18) als ggf. verspannbarer oder sicherbarer Haken oder als Flansch ausgebildet ist.

13. Fahrzeug nach Anspruch 12, **dadurch gekennzeichnet, dass** das Fahrgestell (6) nach einem der Ansprüche 2 bis 11 ausgebildet ist.

14. Fahrzeug nach Anspruch 12 oder 13, **dadurch gekennzeichnet, dass** der Aufbau (4) einen Boden (5) besitzt, der mehrlagig ist und Zwischenräume aufweist.

15. Fahrzeug nach Anspruch 12, 13 oder 14, **dadurch gekennzeichnet, dass** das Fahrzeug (1) als Anhänger mit einer Deichsel (7) oder als Kraftfahrzeug, insbesondere Wohnmobil, ausgebildet ist, wobei insbesondere der Aufbau (4) als Wohnmobilaufbau, Kühlkoffer oder Verkaufs- oder Präsentationsaufbau ausgebildet ist.

## Claims

1. Chassis for land vehicles with two longitudinal members (11, 12), optionally with a cross member (13) and an axial arrangement (9), wherein a holder (18) for a unit (19) of a vehicle superstructure (4) is arranged on a longitudinal member (11, 12) and/or on a cross member (13), and wherein the longitudinal member (11, 12) and/or cross member (13) and the holder (18) having a defined interface (24) for the installation and mutual adaptation, **characterized in that** the holder interface (24) has mutually adapted connecting elements (28, 31, 32) on a longitudinal member (11, 12) and/or on a cross member (13) and on the holder (18), wherein one connecting element (28) is in the form of an opening, in particular a slot (29) or a key hole (30), in a longitudinal member (11, 12) and/or a cross member (13), and a connecting element (31, 32) on the holder (18) is in the form of an optionally interlockable or securable hook or a flange.

2. Chassis according to Claim 1, **characterized in that** the holder (18) and the unit (19) of the superstructure (4) has, for the attachment and the mutual adaptation, a defined interface (23) with mutually adapted connecting elements on the holder (18) and on the unit (19).

3. Chassis according to Claim 1 or 2, **characterized in that** the holder (18) is arranged in an interior space (14) of the chassis (6) between the longitudinal members (11, 12).

4. Chassis according to Claim 1, 2 or 3, **characterized in that** the holder interface (24) is arranged on an upright web (15) of a longitudinal member (11, 12) and/or of a cross member (13).

5. Chassis according to one of the preceding claims, **characterized in that** a plurality of connecting elements (28, 31, 32) are arranged, in particular in a grid (27), on a holder interface (24) on a longitudinal member (11, 12) and/or on a cross member (13).

6. Chassis according to one of the preceding claims, **characterized in that** the holder (18) is fastenable to the chassis (6) without a thermal welded joint, wherein the holder is held, preferably mounted, with a securable interlocking connection.

7. Chassis according to one of the preceding claims, **characterized in that** the longitudinal member (11, 12) and/or the cross member (13) is in the form of a multiply folded sheet-metal profile, wherein a connecting element (28, 31, 32) of the holder interface (24) is arranged on an upright web (15) of a longitudinal member (11, 12) and/or of a cross member (13) and has a reinforcement (25, 26), in particular a projection or a deformation.

8. Chassis according to one of the preceding claims, **characterized in that** the holder (18) has one or more fittings (20) which are fittable on the chassis (6) and having one or more, in particular two, connecting elements (28, 31, 32).

9. Chassis according to one of the preceding claims, **characterized in that** the holder (18) is fixedly or releaseably connected on one or on more than one side to a longitudinal member (11, 12) and/or to a cross member (13).

10. Chassis according to one of the preceding claims, **characterized in that** the holder (18) has a container for receiving one or more units (19).

11. Chassis according to one of the preceding claims, **characterized in that** a unit (19) is in the form of an air-conditioning apparatus or part thereof, in particular in the form of a heating unit, air-conditioning system, cooling or refrigerating device, ventilation means or the like, for the interior of the superstructure or in the form of a heat generator and delivery device and optionally also energy accumulator for a heating unit or in the form of a fresh water tank with an attached pump.

12. Vehicle, in particular land vehicle, with a chassis (6), a preferably box-shaped superstructure (4) and a unit (19) of the superstructure (4), in particular a heating unit or air-conditioning system, wherein the chassis (6) has two longitudinal members (11, 12), optionally a cross member (13) and an axial arrangement (9), and wherein a holder (18) for the unit (19) arranged outside and below the superstructure (4) and functionally connected to the superstructure (4) is arranged on a longitudinal member (11, 12) and/or on a cross member (13), and wherein the longitudinal member (11, 12) and/or cross member (13) and the holder (18) have a defined interface (24) for the installation and the mutual adaptation, wherein the holder interface (24) has mutually adapted connecting elements (28, 31, 32) on a longitudinal member (11, 12) and/or on a cross member (13) and on the holder (18), wherein a connecting element (28) is in the form of an opening, in particular a slot (29) or a key hole (30), in a longitudinal member (11, 12) and/or in a cross member (13), and a connecting element (31, 32) on the holder (18) is in the form of an optionally interlockable or securable hook or a flange.

13. Vehicle according to Claim 12, **characterized in that** the chassis (6) is designed according to one of Claims 2 to 11.

14. Vehicle according to Claim 12 or 13, **characterized in that** the superstructure (4) has a floor (5) which is multi-layered and has intermediate spaces.

15. Vehicle according to Claim 12, 13 or 14, **characterized in that** the vehicle (1) is in the form of a trailer with a tow bar (7) or in the form of a motor vehicle, in particular campervan, wherein the superstructure (4) is in particular in the form of a campervan superstructure, refrigerated van body or sales or presentation superstructure.

## Revendications

1. Châssis pour véhicules routiers, comprenant deux longerons (11, 12), éventuellement une traverse (13) et un agencement d'essieu (9), une fixation (18) pour un groupe (19) d'une carrosserie de véhicule (4) étant disposée au niveau d'un longeron (11, 12) et/ou d'une traverse (13) et le longeron (11, 12) et/ou la traverse (13) et la fixation (18) présentant une interface définie (24) pour le montage et l'adaptation mutuelle, **caractérisé en ce que** l'interface de fixation (24) présente des éléments de liaison (28, 31, 32) adaptés les uns aux autres au niveau d'un longeron (11, 12) et/ou d'une traverse (13) et au niveau de la fixation (18), un élément de liaison (28) étant réalisé sous forme d'ouverture, en particulier sous forme de fente (29) ou sous forme de trou de serrure (30), dans un longeron (11, 12) et/ou une traverse (13) et un élément de liaison (31, 32) étant réalisé au niveau de la fixation (18) sous forme de crochet pouvant être serré ou fixé ou sous forme de bride.

2. Châssis selon la revendication 1, **caractérisé en ce que** la fixation (18) et le groupe (19) de la carrosserie (4) présentent, pour le montage et l'adaptation mutuelle, une interface définie (23) avec des éléments de liaison adaptés les uns aux autres au niveau de la fixation (18) et au niveau du groupe (19).

3. Châssis selon la revendication 1 ou 2, **caractérisé en ce que** la fixation (18) est disposée dans un espace interne (14) du châssis (6) entre les longerons (11, 12).

4. Châssis selon la revendication 1, 2 ou 3, **caractérisé en ce que** l'interface de fixation (24) est disposée au niveau d'une nervure dressée (15) d'un longeron (11, 12) et/ou d'une traverse (13).

5. Châssis selon l'une quelconque des revendications précédentes, **caractérisé en ce que** plusieurs éléments de liaison (28, 31, 32) sont disposés au niveau d'une interface de fixation (24) au niveau d'un longeron (11, 12) et/ou d'une traverse (13), notamment suivant une grille (27).

6. Châssis selon l'une quelconque des revendications précédentes, **caractérisé en ce que** la fixation (18) au niveau du châssis (6) peut être fixée sans liaison thermique soudée, en étant maintenue par engagement par correspondance géométrique visible, de préférence par accrochage.

7. Châssis selon l'une quelconque des revendications précédentes, **caractérisé en ce que** le longeron (11, 12) et/ou la traverse (13) sont réalisés sous forme de profilé en tôle coudé plusieurs fois, un élément de liaison (28, 31, 32) de l'interface de fixation (24) étant disposé au niveau d'une nervure dressée (15) d'un longeron (11, 12) et/ou d'une traverse (13) et présentant un renforcement (25, 26), notamment une saillie ou une déformation.

8. Châssis selon l'une quelconque des revendications précédentes, **caractérisé en ce que** la fixation (18) présente une ou plusieurs ferrures (20) pouvant être montées sur le châssis (6), avec un ou plusieurs, notamment deux, éléments de liaison (28, 31, 32).

9. Châssis selon l'une quelconque des revendications précédentes, **caractérisé en ce que** la fixation (18) est connectée fixement ou de manière amovible au niveau d'un ou plusieurs côtés à un longeron (11, 12) et/ou une traverse (13).

10. Châssis selon l'une quelconque des revendications précédentes, **caractérisé en ce que** la fixation (18) présente un récipient pour recevoir un ou plusieurs groupes (19).

11. Châssis selon l'une quelconque des revendications précédentes, **caractérisé en ce qu'**un groupe (19) est réalisé sous forme d'appareil de climatisation ou d'une partie de celui-ci, en particulier sous forme de chauffage, d'installation de climatisation, de dispositif de refroidissement ou de réfrigérateur, de ventilation ou similaire pour l'espace interne de la carrosserie, ou sous forme de générateur de chaleur et de dispositif de transport et éventuellement aussi d'accumulateur d'énergie pour un chauffage ou un réservoir d'eau fraîche avec une pompe raccordée.

12. Véhicule, en particulier véhicule routier, comprenant un châssis (6), une carrosserie (4) de préférence en forme de caisse et un groupe (19) de la carrosserie (4), en particulier d'un chauffage ou d'une installation de climatisation, le châssis (6) présentant deux longerons (11, 12), éventuellement une traverse (13) et un agencement d'essieu (9) et une fixation (18) pour le groupe (19) disposé l'extérieur et en dessous de la carrosserie (4) et raccordé fonctionnellement à la carrosserie (4) étant disposé au niveau d'un longeron (11,12) et/ou d'une traverse, et le longeron (11, 12) et/ou la traverse (13) et la fixation (18) présentant une interface définie (24) pour le montage et l'adaptation mutuelle, l'interface de fixation (24) présente des éléments de liaison adaptés les uns aux autres (28, 31, 32) au niveau d'un longeron (11, 12) et/ou d'une traverse (13) et au niveau de la fixation (18), un élément de liaison (28) étant réalisé sous forme d'ouverture, en particulier sous forme de fente (29) ou sous forme de trou de serrure (30), dans un longeron (11, 12) et/ou une traverse (13), et un élément de liaison (31, 32) étant réalisé au niveau de la fixation (18) sous forme de crochet pouvant être serré ou fixé ou sous forme de bride.

13. Véhicule selon la revendication 12, **caractérisé en ce que** le châssis (6) est réalisé selon l'une quelconque des revendications 2 à 11.

14. Véhicule selon la revendication 12 ou 13, **caractérisé en ce que** la carrosserie (4) possède un fond (5) qui est en plusieurs couches et présente des espaces intermédiaires.

15. Véhicule selon la revendication 12, 13 ou 14, **caractérisé en ce que** le véhicule (1) est réalisé sous forme de remorque avec un timon (7) ou sous forme de véhicule automobile, en particulier de caravane, la carrosserie (4) étant réalisée notamment sous forme de carrosserie de caravane, de véhicule frigorifique, ou de structure pour la vente ou la présentation.
